(19) Europäisches Patentamt / European Patent Office / Office européen des brevets

(11) **EP 3 610 199 B1**

(12) **EUROPÄISCHE PATENTSCHRIFT**

(45) Veröffentlichungstag und Bekanntmachung des Hinweises auf die Patenterteilung:
**01.11.2023   Patentblatt 2023/44**

(21) Anmeldenummer: **18716132.8**

(22) Anmeldetag: **20.03.2018**

(51) Internationale Patentklassifikation (IPC):
*F24C 15/00* (2006.01)   *F24C 7/08* (2006.01)
*F24C 14/00* (2006.01)   *G01N 21/94* (2006.01)
*G01N 21/47* (2006.01)   *G01N 21/954* (2006.01)

(52) Gemeinsame Patentklassifikation (CPC):
**G01N 21/4738; F24C 7/085; F24C 14/00; F24C 15/008; G01N 21/94; G01N 21/954;** G01N 2021/4764

(86) Internationale Anmeldenummer:
**PCT/EP2018/057034**

(87) Internationale Veröffentlichungsnummer:
**WO 2018/188912 (18.10.2018 Gazette 2018/42)**

(54) **BESTIMMEN EINES VERSCHMUTZUNGSGRADS IN EINEM GARRAUM**

DETERMINING A DEGREE OF CONTAMINATION IN A COOKING CHAMBER

DÉTERMINATION D'UN DEGRÉ D'ENCRASSEMENT DANS UN ESPACE DE CUISSON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2017   DE 102017206058**

(43) Veröffentlichungstag der Anmeldung:
**19.02.2020   Patentblatt 2020/08**

(73) Patentinhaber: **BSH Hausgeräte GmbH**
**81739 München (DE)**

(72) Erfinder:
- **DEUTSCH, Tobias**
  **83301 Traunreut (DE)**
- **EITER, Hans-Martin**
  **84558 Kirchweidach (DE)**
- **HEIKEL, Barbara**
  **83278 Traunstein (DE)**
- **HORN, Katrin**
  **83301 Traunreut (DE)**
- **NEUMAYER, Dan**
  **83233 Bernau (DE)**
- **RANZENBERGER, Barbara**
  **83224 Grassau (DE)**
- **ROTH, Kerstin**
  **75015 Bretten (DE)**
- **STROBL, Veronika**
  **83278 Traunstein (DE)**

(56) Entgegenhaltungen:
| | |
|---|---|
| EP-A1- 0 898 163 | WO-A1-2014/102074 |
| DE-A1- 4 223 656 | DE-A1- 19 606 571 |
| DE-A1-102012 218 002 | DE-A1-102014 116 709 |
| DE-A1-102015 105 128 | DE-B3-102011 084 180 |
| DE-U1-202005 012 027 | KR-A- 20110 011 817 |

**Beschreibung**

Die Erfindung betrifft ein Verfahren zum Bestimmen einer Verschmutzung einer Oberfläche, die einem Garraum eines Gargeräts ausgesetzt ist, wobei bei dem Verfahren ein Messbereich der Oberfläche beleuchtet wird und eine von dem Messbereich abgestrahlte Stärke einer Lichtstrahlung als ein Maß für die Verschmutzung gemessen wird. Die Erfindung betrifft auch ein Gargerät, aufweisend einen Garraum, mindestens eine Lichtquelle zur Bestrahlung eines Messbereichs einer Oberfläche, die dem Garraum ausgesetzt ist, mit einem Lichtbündel, mindestens einen Lichtsensor zum Messen von Lichtstrahlung und eine mit der mindestens einen Lichtquelle und mit dem mindestens einen Lichtsensor gekoppelte Verarbeitungseinrichtung, die dazu eingerichtet ist, aus der Lichtstrahlung einen Streuungswert als ein Maß für die Verschmutzung zu bestimmen. Die Erfindung ist insbesondere vorteilhaft anwendbar auf Öfen, insbesondere auf selbstreinigende Öfen.

DE 10 2014 116 709 A1 offenbart ein Gargerät mit einem Garraum, der von mindestens einer Garraumwand umgeben ist, und mit einem optischen Verschmutzungssensor, der eine transparente Sensorfläche, eine Lichtquelle und einen Lichtsensor aufweist. Die Sensorfläche ist Teil der Garraumwand, und die Lichtquelle und der Lichtsensor sind außerhalb des Garraums so angeordnet, dass Licht von der Lichtquelle schräg auf die Sensorfläche fällt und von der Sensorfläche reflektiertes Licht vom Lichtsensor empfangen wird. Außerdem wird ein Verfahren zur Bestimmung des Verschmutzungsgrades eines Gargeräts beschrieben.

WO 2014/102074 A1 offenbart einen Ofen mit einem Gehäuse, einem innerhalb des Gehäuses angeordneten Garraum, in dem ein Garvorgang durchgeführt wird, einer Heizeinrichtung zur pyrolytischen Reinigung durch Aufheizen des Garraums auf Hochtemperaturwerte, einer zumindest teilweise aus Glas bestehende Ofentür und einer Lichtquelle, welche der Beleuchtung des Innenraums dient. An einer Seitenwand oder an einer Decke des Garraums ist eine transparente Scheibe angeordnet, hinter der sich außerhalb des Garraums ein Lichtsensor befindet. Der Lichtsensor erfasst die Lichtwellen, die von der Lichtquelle in den Garraum emittiert werden und durch die transparente Scheibe fallen. Eine Steuereinheit bestimmt den Schmutzgrad des Garraums durch Auswertung der erfassten Lichtintensitätsdaten des Lichtsensors.

EP 0 528 250 A2 offenbart ein automatisierbares, pyrolytisches Selbstreinigungsverfahren für Herde, deren Muffel durch wenigstens ein Heizelement und ggf. mit zusätzlicher Umluftheizung betreibbar ist, wobei die Muffel durch ein Umluftgebläse belüftbar und mit Mitteln zur pyrolytischen Selbstreinigung ausgerüstet ist, wobei im Garraum eine betriebsbedingte Backofen-Verschmutzungswerte erfassende Sensorik angeordnet ist, wobei eine eingangsseitig mit dem Verschmutzungssensor verbundene Auswerteeinheit den Pyrolysestart einleitet oder empfiehlt, wobei ein mit der Auswerteeinheit verbundener Gassensor im Abluftweg der Muffel angeordnet ist, wobei die Auswerteeinheit die Sensorsignale mit einem auf den Pyrolysebetrieb angepassten Logiksystem analysiert, wobei die Auswerteeinheit aus den Sensorsignalen nach einer typischen Pyrolyse-Betriebszeit eine verschmutzungsartbedingte Pyrolyse-Mindesttemperatur und eine optimierte Pyrolyse-Gesamtzeit bestimmt und wobei die Auswerteeinheit das pyrolytische Selbstreinigungsverfahren nach einer verschmutzungsartbedingten Pyrolyse-Gesamtzeit beendet.

DE 10 2014 217 636 A1 offenbart ein Verfahren zum Betreiben eines Speisenbehandlungsgeräts mit einem Speisenbehandlungsraum, wobei eine erste Zahl von aktivierten Speisenbehandlungs-Betriebsarten einer ersten Art gezählt wird, die mindestens eine erste Randbedingung erfüllen, und dann, wenn die erste Zahl ein vorbestimmtes Kriterium erfüllt, von dem Speisenbehandlungsgerät mindestens eine Reinigungsaktion ausgelöst wird. Ein Speisenbehandlungsgerät mit einem Speisenbehandlungsraum ist zur Durchführung des Verfahrens ausgestaltet. Das Verfahren ist insbesondere vorteilhaft anwendbar auf Backöfen, Mikrowellengeräte und/oder Dampfbehandlungsgeräte.

DE 101 28 024 A1 offenbart ein Verfahren zur Steuerung der Selbstreinigung eines Gargeräts, insbesondere mittels Pyrolyse, wobei das Gargerät ein Ofengehäuse und einen in dem Ofengehäuse angeordneten, über eine Tür verschließbaren Garraum aufweist und der Garraum über mindestens eine im Ofengehäuse angeordnete Lichtquelle beleuchtet ist. Um ein Verfahren bereitzustellen, welches dem Benutzer bei einfachem und kostengünstigem Aufbau und Ablauf automatisch anzeigt, dass die Verschmutzung des Garraums ein solches Maß angenommen hat, dass ein Reinigungsprozess eingeleitet werden sollte, wird vorgeschlagen, dass mittels eines im Ofengehäuse angeordneten optischen Sensors die von der mindestens einen Lichtquelle in den Garraum abgestrahlte optische Strahlung erfasst und der Beginn und/oder die Dauer der Selbstreinigung in Abhängigkeit von der mittels des optischen Sensors erfassten optischen Strahlung gesteuert werden.

DE 41 27 388 A1 bezieht sich auf einen Herd mit pyrolytischer Selbstreinigung, dessen Muffel durch ein in wenigstens einem Wandbereich angeordnetes Heizelement und ggf. mit zusätzlicher Umluftheizung betreibbar ist, wobei die Muffel durch ein Umluftgebläse belüftbar und mit Mitteln zur pyrolytischen Selbstreinigung ausgerüstet ist, wobei im Garraum eine betriebsbedingte Backofen-Verschmutzungswerte erfassende Sensorik angeordnet ist, wobei die Sensorik mit dem Eingang einer Auswerteschaltung verbunden ist, wobei die Auswerteschaltung die Eingangswerte der Sensorikfrequenz umsetzt, digitalisiert aufzählt, speichert und verkettet, wobei die Auswerteschaltung einen Verschmutzungsgrad ausgabeseitig signalisiert und wobei die Auswerteschaltung eine Pyrolyseeinleitung empfiehlt und/oder durchführt.

DE 20 2005 012 027 U1 bezieht sich auf ein optisches System für eine Ofenbeleuchtung und eine Analyse.

KR 2011 0011817 A beschreibt eine Verschmutzungskontrolle eines Garraums anhand einer Reflektionsmessung an einer Garrauminnenwand mit einem Auslösen eines Reinigungsvorgangs basierend auf der Verschmutzungsmessung.

Es ist die **Aufgabe** der vorliegenden Erfindung, die Nachteile des Standes der Technik zumindest teilweise zu überwinden und insbesondere eine robuste Möglichkeit zum besonders zuverlässigen Erkennen einer Verschmutzung und ggf. eines Reinigungsbedarfs dem Garraum ausgesetzten und damit auch verschmutzbaren Oberfläche eines Gargeräts bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar. Die Aufgabe wird gelöst durch ein Verfahren zum Bestimmen einer Verschmutzung bzw. eines Verschmutzungsgrads einer dem Garraums eines Gargeräts ausgesetzten Oberfläche, bei dem ein Teilbereich (im Folgenden ohne Beschränkung der Allgemeinheit als "Messbereich" bezeichnet) der Oberfläche mittels eines Lichtbündels beleuchtet wird, eine von dem Messbereich abgestrahlte Stärke einer Streustrahlung gemessen wird und aus der Streustrahlung ein Streuungswert als ein Maß für die Verschmutzung bzw. den Verschmutzungsgrad bestimmt bzw. berechnet wird.

Dieses Verfahren ergibt den Vorteil, dass durch die direkte Messung der dem Garraum ausgesetzten Oberfläche deren Verschmutzung besonders genau bestimmt werden kann. Dadurch kann die Zahl der Reinigungsvorgänge zum Reinigen der Oberfläche optimiert werden, speziell besonders gering gehalten werden und gleichzeitig sichergestellt werden, dass eine Funktionalität der Oberfläche zuverlässig aufrechterhalten bleibt.

Der Garraum dient zur Aufnahme von Gargut und ist von einer Garraumwandung umgeben oder begrenzt. Der Garraum weist typischerweise eine frontseitige Beschickungsöffnung aus, welche mittels einer Garraumtür verschließbar ist. Die Garraumtür kann ein Sichtfenster aufweisen. Die Garraumwandung kann auch als Muffel bezeichnet werden. Der Garraum ist insbesondere durch Heizvorrichtungen beheizbar, mit Dampf beaufschlagbar und/oder mit Mikrowellen bestrahlbar.

Unter einer Verschmutzung kann insbesondere eine Belegung der Oberfläche mit Speiserückständen und/oder Wrasen verstanden werden, der z.B. Fett, Speisepartikel und/oder Speiseausdünstungen usw. enthalten kann und während eines Garvorgangs erzeugt wird.

Das Lichtbündel ist insbesondere ein sich entlang eines Lichtpfads gerichtet ausbreitendes Lichtbündel. Das Lichtbündel ist in einer zur Erreichung einer besonders genauen Bestimmung der Verschmutzung vorteilhaften Weiterbildung gering divergent, insbesondere so gering divergent, dass es nicht zur Allgemeinbeleuchtung des Garraums vorgesehen oder nutzbar ist. Insbesondere wird breitwinklig den Garraum beleuchtendes Licht - das z.B. von einer Ofenlampe erzeugt wird - nicht als Lichtbündel verstanden. An dem beleuchteten Messbereich der Oberfläche wird mittels des Lichtbündels ein Leuchtfleck erzeugt. Eine Ofenlampe erzeugt hingegen typischerweise ein breitwinklig in den Garraum strahlendes Lichtabstrahlmuster zur Beleuchtung des Garraums.

In einer anderen Weiterbildung wird das Lichtbündel breitwinklig in den Garraum gestrahlt, z.B. mittels einer Ofenlampe. Dies kann Bauraum und Kosten sparen. Insbesondere für den Fall einer breitwinkligen Garraumbeleuchtung - aber auch allgemein - ist es zur Erreichung eines geringen Signal-Rausch-Verhältnisses des Streulichts vorteilhaft, wenn zwischen der mindestens einen Lichtquelle und dem mindestens einen Lichtsensor kein direkter Lichtpfad existiert, also von einer Lichtquelle abgestrahltes Licht nicht direkt (d.h., ohne Lichtstreuung) in den Sensor fallen kann.

Um ein Hintergrundsignal zu berücksichtigen, kann es vorteilhaft sein, eine von dem Messbereich abgestrahlte Stärke einer Streustrahlung bei ausgeschalteten Lichtquellen zu messen. Das so gemessene Hintergrundsignal kann dann z.B. von einem Messsignal bei angeschalteten Lichtquellen abgezogen werden.

Das Lichtbündel kann mittels mindestens einer Lichtquelle erzeugt werden. Die Lichtquelle umfasst vorteilhafterweise ein oder mehrere Halbleiterlichtquellen wie mindestens eine Leuchtdiode und/oder mindestens eine Laserdiode. Die Lichtquelle kann alternativ oder zusätzlich mindestens eine Halogenlampe aufweisen. Bei Vorhandensein mehrerer Lichtquellen können zumindest zwei Lichtquellen Licht gleicher oder unterschiedlicher spektraler Zusammensetzung abstrahlen oder emittieren.

Dass die von dem Messbereich abgestrahlte Streustrahlung gemessen wird, umfasst insbesondere, dass ein die Streustrahlung messender Lichtsensor sich nicht im Strahlengang des ungestreuten oder spekular reflektierten Lichtbündels befindet.

Unter einem Streuungswert wird insbesondere ein Wert für eine Stärke einer diffusen Streuung des einfallenden Lichtbündels an dem Messbereich verstanden. Dass dieser Streuungswert als ein Maß für die Verschmutzung des Messbereichs dient, nutzt die Tatsache aus, dass die Verschmutzung das Streuverhalten des Messbereichs ändert. Je stärker die Verschmutzung wird, desto stärker ändert sich auch das Streuverhalten, insbesondere relativ zu einem Streuverhalten eines sauberen Messbereichs. Das Streuverhalten und der Streuungswert können abhängig von einer Wellenlänge des verwendeten Lichtbündels sein.

Gemäß der Erfindung wird der Streuungswert abhängig von einer Referenzstärke der Streustrahlung bestimmt oder berechnet, wobei die Referenzstärke einer Stärke der Streustrahlung bei sauberer Oberfläche entspricht. Dies ergibt den Vorteil, dass eine Bestimmung des Verschmutzungsgrads erheblich zuverlässiger bestimmt werden kann, insbesondere nach mehrfachen Garvorgängen. Die Referenzstärke wird gemäß der Erfindung nach einem Reinigungsvorgang gemessen. Gemäß der Erfindung wird nach jedem (insbesondere automatisch durchgeführten und normal beendeten) Reinigungsvorgang eine Referenzmessung zum Bestimmen der Referenzstärke der Streustrahlung durchgeführt.

Diese aktuelle Referenzstärke ersetzt die zuvor gemessene Referenzstärke zur Berechnung des Streuungswerts. Dieses Merkmal gemäß der Erfindung erhöht eine Genauigkeit der Bestimmung des Streuungswerts weiter.

Es ist noch eine Ausgestaltung, dass zum Messen der Stärke der Streustrahlung eine Lichtintensität oder eine Lichtflussdichte der Streustrahlung gemessen wird. Die Lichtintensität kann mit einem Messsignal eines Lichtsensors korrelieren, so dass eine Höhe des Messsignals auf besonders einfache Weise als ein Maß für die Lichtintensität genutzt werden kann.

Gemäß der Erfindung ist die Oberfläche bzw. der Messbereich eine funktionale Oberfläche.

Das Verfahren ist hierfür besonders vorteilhaft einsetzbar, weil es eine gezielte Reinigung und damit eine Aufrechterhaltung oder Wiederherstellung der Funktionalität (Regeneration) ermöglicht, die sonst aufgrund der Verschmutzung leidet oder sogar ganz verhindert wird. Eine rechtzeitige Reinigung kann insbesondere verhindern, dass eine funktionale Oberfläche bei zu starker Verschmutzung irreversibel ihre Funktion verliert. Es ist eine Weiterbildung, dass ein Sichtfenster keine funktionale Oberfläche für daran anhaftende Verschmutzungen darstellt. Die funktionale Oberfläche ist dann insbesondere eine blickdichte funktionale Oberfläche.

Jedoch braucht, entsprechend von Beispielen außerhalb der beanspruchten Erfindung, an der Messfläche keine funktionale Oberfläche vorhanden zu sein und kann z.B. eine Edelstahloberfläche, eine Emaille-Schicht, usw. sein.

Alternativ kann in einer anderen Weiterbildung ein Sichtfenster vorhanden sein, das Einblick in den Garraum gewährt und dessen Oberfläche zumindest teilweise als Messfläche dient. Das Sichtfenster kann ein Sichtfenster einer Garraumtür oder ein in die Garraumwandung eingelassenes Sichtfenster sein.

Die funktionale Oberfläche ist gemäß der Erfindung eine katalytisch selbstreinigende Oberfläche, oder entsprechend von Beispielen außerhalb der beanspruchten Erfindung, eine pyrolyse-geeignete Oberfläche und/oder eine Antihaftoberfläche sein. Die katalytisch selbstreinigende Oberfläche kann eine sog. "Ecolyse"-Oberfläche sein, die gemäß der Erfindung porös und dadurch matt ist und besonders wenig Energie zur katalytischen Aufspaltung von darauf anhaftenden Verschmutzungen, insbesondere Fett, benötigt.

Es ist außerdem eine Ausgestaltung, dass eine verbrauchte funktionale Oberfläche anhand einer zeitlichen Entwicklung der Referenzstärken der Streustrahlung erkannt wird. Unter einer verbrauchten funktionalen Oberfläche kann insbesondere eine Oberfläche verstanden werden, die eine vorgesehene Funktion (z.B. eine katalytische Funktion, eine Antihaftfunktion usw.) nur noch unzureichend oder gar nicht mehr erfüllen kann. Das Gargerät kann als Reaktion auf ein Erkennen einer verbrauchten Oberfläche einen Nutzer benachrichtigen.

Es ist eine Weiterbildung, dass die zeitliche Entwicklung der Referenzstärken eine Abweichung von zeitlich versetzt gemessenen Referenzstärken umfasst. So kann die verbrauchte Oberfläche dadurch erkannt werden, dass ein Abstand zwischen zwei Referenzstärken einen vorgegebenen Schwellwert erreicht oder überschreitet. Diese beiden Referenzstärken können insbesondere eine zuerst (ggf. noch im Werk) gemessene oder eingestellte Referenzstärke und die zuletzt gemessene Referenzstärke umfassen. Die Referenzstärken können in dem Gargerät gespeichert werden.

Es ist noch eine weitere Ausgestaltung, dass der Streuungswert gemäß der Formel oder Beziehung $A = -\log_{10}(I / I_0)$ bestimmt wird, wobei $A$ der Streuungswert, $I$ die gemessene Lichtintensität und $I_0$ eine Referenzintensität ist. Die Verwendung dieser Beziehung ergibt den Vorteil, dass Unterschiede zwischen unterschiedlichen Verschmutzungen besonders stark hervorgehoben werden. Außerdem wird vorteilhafterweise ein zumindest annäherungsweise linearer Zusammenhang zum Grad der Verschmutzung hergestellt. Durch die Normierung $I / I_0$ erscheint als weiterer Vorteil der Streuungswert einer gereinigten oder sauberen Oberfläche bei Null, was eine Ermittlung des Verschmutzungsgrads weiter erleichtert. Anstelle des Logarithmus zur Basis 10 kann auch eine andere Basis verwendet werden, z.B. der natürliche Logarithmus. Auch kann der Absolutwert von $A$ verwendet werden.

Die obige Beziehung ist analog zur Berechnung einer Extinktion oder Absorptivität aufgebaut, die ein Maß für eine Abschwächung von Licht nach Durchqueren eines Mediums darstellen. Jedoch wird vorliegend diese Formel zur Bestimmung einer Streuungsstärke verwendet.

Gemäß der Erfindung wird mindestens eine Aktion ausgelöst, wenn die Verschmutzung einen kritischen Verschmutzungsgrad erreicht hat. Die Aktion kann ein (z.B. optischer und/oder akustischer) Hinweis an einen Nutzer sein. Die Aktion umfasst gemäß der Erfindung zumindest ein Auslösen eines Reinigungsvorgangs zum Reinigen der verschmutzten Oberfläche.

Es ist eine Weiterbildung, dass festgestellt wird, dass die Verschmutzung einen kritischen Verschmutzungsgrad erreicht hat, wenn der Streuungswert einen vorgegebenen Schwellwert zumindest erreicht hat, also den vorgegebenen Schwellwert von niedrigeren Werten kommend erreicht oder überschreitet oder von höheren Werten kommend erreicht oder unterschreitet. Der kritische Verschmutzungsgrad kann insbesondere ein Verschmutzungsgrad sein, ab dem eine Reinigung der Oberfläche empfehlenswert ist oder vorgeschlagen wird.

Es ist zudem eine Ausgestaltung, dass die Streustrahlung während eines Reinigungsvorgangs gemessen wird und der Reinigungsvorgang beendet wird, wenn der Streuungswert einen vorgegebenen Schwellwert erreicht. So kann ein Verschmutzungsgrad der Oberfläche in Echtzeit während eines Reinigungsvorgangs bestimmt werden und dazu benutzt werden, den Reinigungsvorgang praktisch unmittelbar nach Erreichen eines vorgegebenen Reinigungsergebnisses zu beenden. Dadurch können Zeit und Energie eingespart werden.

Es ist auch noch eine Ausgestaltung, dass die Streustrahlung auf ein charakteristisches Absorptionsverhalten hin untersucht wird. Dadurch kann eine Kenntnis der die Verschmutzung bewirkenden Stoffe (z.B. Fett, Speisereste, Verbrennungsprodukte von Speisen usw.) erlangt werden, da diese Stoffe typisches Absorptionsverhalten, insbesondere typische Absorptionsspektren, aufweisen. Es ist eine Weiterbildung, dass auf Grundlage der Kenntnis charakteristischer Absorptionsverhalten ein Reinigungsvorgang angepasst wird. So können eine Temperatur und/oder eine Dauer des Reinigungsvorgangs erhöht werden, falls dies zur Entfernung bestimmter detektierter Stoffe der Verschmutzung vorteilhaft ist.

Es ist außerdem noch eine Ausgestaltung, dass die Streustrahlung während eines Reinigungsvorgangs gemessen und auf ein charakteristisches Absorptionsverhalten hin untersucht wird und abhängig von einem Vorliegen mindestens eines vorgegebenen Absorptionsverhaltens und/oder mindestens eines erkannten Stoffs hin der Reinigungsvorgang verändert wird, insbesondere in seiner Wirkung verringert oder abgebrochen (reguliert) wird. Dies ergibt den Vorteil, dass ein besonders kurzer, gründlicher Reinigungsvorgang ermöglicht wird. Beispielsweise kann der Reinigungsvorgang abgebrochen werden, wenn bestimmte Stoffe nicht mehr oder nur noch schwach detektierbar sind. Zusätzlich oder alternativ kann der Reinigungsvorgang abgebrochen werden, wenn bestimmte Stoffe neu detektiert werden und/oder mit einer vorgegebenen Stärke auftreten, insbesondere Abbauprodukte des Reinigungsvorgangs (z.B. Asche).

Es ist eine zur besonders zuverlässigen Detektierung von Stoffen durch Analyse der Streustrahlung vorteilhafte Weiterbildung, dass zeitliche Intensitätsänderungen der Streustrahlung gemessen werden. Dabei ist es besonders vorteilhaft, wenn die Streustrahlung in mehreren unterschiedlichen Spektralbereichen der Streustrahlung ausgewertet wird. Insbesondere können in den unterschiedlichen Spektralbereichen gemessene Intensitäten und/oder Intensitätsänderungen gemessen und zur Stoffbestimmung verwendet werden. Zur Stoffbestimmung können beispielsweise bestimmte Intensitätsverhältnisse ("Signaturen") und/oder deren zeitliche Änderungen ausgewertet oder erkannt werden.

Es ist eine zur präzisen Bestimmung von Signaturen vorteilhafte Weiterbildung, dass mindestens eine Konversions-LED als Lichtquelle verwendet wird, die verschiedene Leuchtstoffe zur Umwandlung von halbleitertechnisch erzeugtem Primärlicht in jeweiliges Sekundärlicht erzeugt. Dadurch können ein breitbandiges Emissionsspektrum und/oder ein Emissionsspektrum, das mehrere unterscheidbare Wellenlängenspitzen (Peaks) aufweist, bereitgestellt werden. Insbesondere können die den Wellenlängenspitzen zugeordneten unterschiedlichen Spektralbereiche einzeln ausgewertet werden, beispielsweise um jeweilige Intensitäten bzw. Intensitätsänderungen zu bestimmen und damit vorbestimmte Signaturen nachzuweisen.

Es ist zudem noch eine Ausgestaltung, dass das auf den Messbereich einfallende Lichtbündel Infrarotlicht umfasst. Dies ergibt den Vorteil, dass das Lichtbündel für das menschliche Auge nicht sichtbar ist. Zudem ist Infrarotlicht besonders gut dazu geeignet, Absorptionsspektren organischer Materialien bzw. Moleküle anzuregen. Es ist eine besonders vorteilhafte Weiterbildung, dass das Infrarotlicht NIR (Nah-Infrarot)-Licht ist.

Allgemein kann das Lichtbündel nur für das menschliche Auge sichtbares Licht, nur für das menschliche Auge nicht sichtbares Licht (z.B. Ultraviolettlicht, Infrarotlicht, insbesondere NIR-Licht) oder eine Kombination davon aufweisen. Eine spektrale Breite des Lichtbündels kann breiter oder schmaler sein als eine spektrale Messempfindlichkeit.

Die Aufgabe wird auch gelöst durch ein Gargerät, wie in Anspruch 10 definiert, aufweisend einen Garraum, mindestens eine Lichtquelle zur Bestrahlung eines Messbereichs einer Oberfläche, die dem Garraum ausgesetzt ist, mit einem Lichtbündel, mindestens einen Lichtsensor zum Messen von Streustrahlung von dem Messbereich und eine mit der mindestens einen Lichtquelle und mit dem mindestens einen Lichtsensor gekoppelte Verarbeitungseinrichtung, die dazu eingerichtet ist, aus der Streustrahlung einen Streuungswert als ein Maß für die Verschmutzung zu bestimmen.

Das Gargerät kann analog zu dem Verfahren ausgebildet sein und weist die gleichen Vorteile auf. Auch kann das Verfahren analog zu dem Gargerät ausgebildet werden.

Es ist eine Ausgestaltung, dass die Oberfläche eine Oberfläche eines in den Garraum eingeschobenen Gargutträgers ist bzw. sich mindestens eine Messfläche auf einem Gargutträger befindet. So kann dessen Verschmutzung zuverlässig und genau festgestellt werden. Die Oberfläche des Gargutträgers kann auch , entsprechend von Beispielen außerhalb der beanspruchten Erfindung, eine Antihaftbeschichtung und/oder eine für eine Pyrolyse geeignete Oberfläche aufweisen, z.B. eine Emaille-Schicht.

Dazu können mindestens ein Lichtsensor und mindestens eine Lichtquelle an einer Decke der Garraumwandung angeordnet sein. Beispielsweise ist mindestens ein Lichtsensor senkrecht auf eine Oberseite des Gargutträgers gerichtet und mindestens eine Lichtquelle schräg auf die Oberseite des Gargutträgers gerichtet.

Es ist noch eine Ausgestaltung, dass die Oberfläche eine Oberfläche einer Garraumwandung ist bzw.

sich mindestens eine Messfläche auf der Garraumwandung befindet. Die Oberfläche der Garraumwandung ist dann gemäß der Erfindung eine katalytisch wirksame Oberfläche und kann , entsprechend von Beispielen außerhalb der beanspruchten Erfindung, eine Antihaftbeschichtung, und/oder eine für eine Pyrolyse geeignete Oberfläche aufweisen, z.B. eine Emaille-Schicht.

Es ist auch noch eine Ausgestaltung, dass die Oberfläche eine Oberfläche einer Prallwand ist. Die Oberfläche der Prallwand ist dann, entsprechend der Erfindung, eine katalytisch wirksame Oberfläche, oder kann entsprechend von Beispielen außerhalb der beanspruchten Erfindung eine für eine Pyrolyse geeignete Oberfläche oder eine Antihaftoberfläche sein. Ein Messbereich kann sich beispielsweise an einer Decke, an einem Boden, an einer Seitenwand oder an einer Rückseite der Garraumwandung befinden. Der Messbereich kann vorteilhafterweise an Bereichen befinden, in denen ein besonders hohen Verschmutzungsaufkommen zu erwarten ist, z.B. an einem Boden (auf den Fett usw. herabtropfen kann) der Garraumwandung oder an einer Decke der Garraumwandung oder an Kanten oder Luftdurchlassöffnungen einer Prallwand.

Es ist zudem noch eine Ausgestaltung, dass mindestens ein Lichtsensor an einer dem Messbereich gegenüberliegenden Wand der Garraumwandung angeordnet ist, senkrecht auf den beleuchtbaren Messbereich gerichtet ist und mindestens eine Lichtquelle schräg auf den beleuchtbaren Messbereich gerichtet ist.

Allgemein können mindestens eine Lichtquelle, mindestens ein Lichtsensor und/oder ein Messbereich an einer Garraumtür angeordnet sein.

Es ist eine Weiterbildung, dass ein Messbereich oder mehrere Messbereiche vorhanden sind, mehrere Messbereiche auch an unterschiedlichen Stellen. Es ist eine Weiterbildung, dass mindestens ein Messbereich durch eine oder mehrere Lichtquellen bestrahlbar ist. Es ist eine Weiterbildung, dass mindestens ein Messbereich durch einen oder mehrere Lichtsensoren abfühlbar ist. Es ist eine Weiterbildung, dass eine Lichtquelle einen oder mehrere Messbereiche beleuchten kann.

Die mindestens eine Lichtquelle kann mit einer festen oder einer verstellbaren Strahloptik ausgerüstet sein. Alternativ oder zusätzlich kann der mindestens eine Sensor mit einer festen oder einer verstellbaren Strahloptik ausgerüstet sein.

Zur Aufnahme und Auswertung charakteristischer Absorptionsspektren kann mindestens ein Lichtsensor mit einem Spektrometer gekoppelt sein oder einen Teil eines Spektrometers darstellen.

Das Gargerät ist insbesondere ein elektrisch betreibbares Haushaltsgerät, z.B. ein Küchengerät. Das Gargerät kann eine Backofenfunktionalität, eine Mikrowellenfunktionalität und/oder eine Dampfgarfunktionalität aufweisen. Das Gargerät kann ein eigenständiges Gargerät sein, z.B. ein Backofen. Das Gargerät kann ein Kombinationsgerät sein, z.B. eine Backofen/Kochfeld-Kombination ("Herd").

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.

Fig.1    zeigt als Schnittdarstellung in Draufsicht eine Skizze eines Gargeräts gemäß einem ersten Ausführungsbeispiel;

Fig.2    zeigt eine Auftragung einer Intensität von Streulicht gegen eine Wellenlänge für das Gargerät gemäß dem ersten Ausführungsbeispiel;

Fig.3    zeigt eine Auftragung eines aus Fig.2 abgeleiteten Streuungswerts gegen eine Wellenlänge;

Fig.4    zeigt als Schnittdarstellung in Seitenansicht eine Skizze eines Gargeräts gemäß einem zweiten Ausführungsbeispiel;

Fig.5    zeigt eine Auftragung einer Intensität von Streulicht gegen eine Wellenlänge für das Gargerät gemäß dem zweiten Ausführungsbeispiel;

Fig.6    zeigt eine Auftragung eines aus Fig.5 abgeleiteten Streuungswerts gegen eine Wellenlänge.

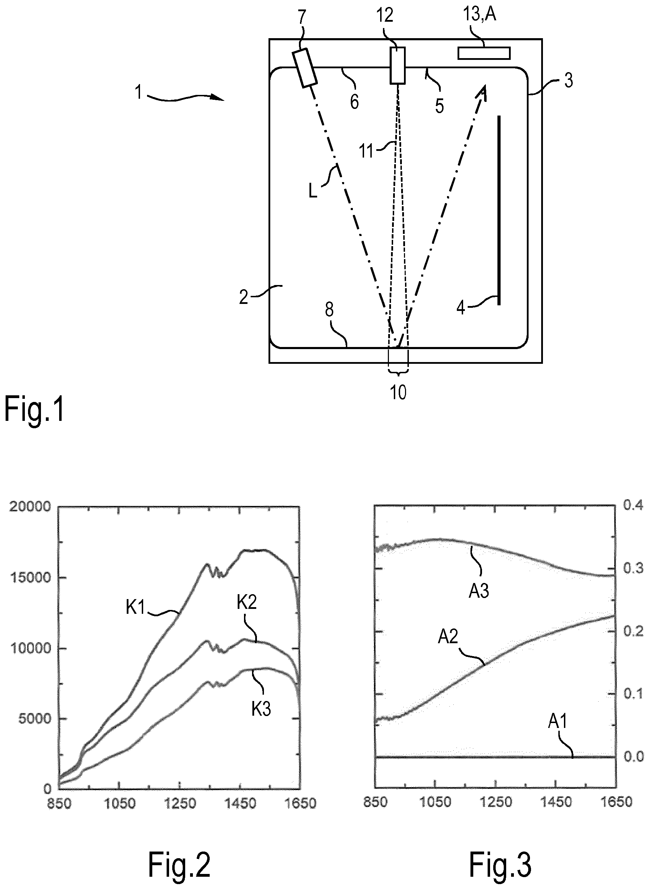

Fig.1 zeigt als Schnittdarstellung in Draufsicht eine Skizze eines Gargeräts in Form eines Backofens 1. Der Backofen 1 weist einen Garraum 2 auf, der von einer Garraumwandung in Form einer Ofenmuffel 3 begrenzt ist. In dem Garraum 2 ist beabstandet von einer Rückwand der Ofenmuffel 3 eine Prallwand 4 angeordnet. Hinter der Prallwand 4 kann eine Umluftheizung (o. Abb.) vorhanden sein. Die Ofenmuffel 3 ist hier an ihrer dem Garraum 2 ausgesetzten Innenseite mit einer katalytisch selbstreinigenden Oberfläche 5 (Ecolyse-Oberfläche) versehen. Der Backofen weist eine oder mehrere elektrisch betriebene Heizungen (o. Abb.) zum Heizen des Garraums 2 auf.

Der Backofen 1 weist ferner an einer linken Seitenwand 6 der Ofenmuffel 3 eine Lichtquelle 7, z.B. umfassend eine LED- oder Laser-Lichtquelle, auf, welche schräg auf die gegenüberliegende rechte Seitenwand 8 der Ofenmuffel 3 gerichtet ist. Das von der Lichtquelle 7 emittierte Lichtbündel L kann aus NIR-Licht bestehen. Das Lichtbündel L fällt schräg auf die rechte Seitenwand 8 und erzeugt dort an einem Messbereich 10 einen Leuchtfleck. Das Lichtbündel L wird von dem Messbereich 10 teilweise spiegelnd reflektiert und teilweise diffus reflektiert.

Der Messbereich 10 befindet sich in einem Sichtbereich 11 eines für das NIR-Licht empfindlichen Lichtsensors 12. Der Lichtsensors 12 ist an der linken Seitenwand 6 der Ofenmuffel 3 angeordnet und senkrecht zu der rechten Seitenwand 8 ausgerichtet. Der Lichtsensor 12 empfängt somit nur von dem Messbereich 10 diffus abgestrahlte Streustrahlung. Eine Größe des Leuchtflecks und/oder des Sichtbereichs 11 kann ggf. über Strahloptiken eingestellt werden (o. Abb.).

Der Backofen 1 weist ferner eine mit der Lichtquelle 7 und mit dem Lichtsensor 12 gekoppelte Verarbeitungseinrichtung 13 auf, die dazu eingerichtet ist, aus der Streustrahlung einen Streuungswert A als ein Maß für eine Verschmutzung des Messbereichs 10 zu bestimmen. Die Verarbeitungseinrichtung 13 kann eine Steuereinrichtung des Backofens 1 sein. Sie kann z.B. auch dazu eingerichtet sein, Garprogramme und mindestens ein Reinigungsprogramm zum Reinigen der katalytisch selbstreinigenden Oberfläche 5 zu steuern.

Alternativ oder zusätzlich können eine zusätzliche Lichtquelle und ein zusätzlicher Lichtsensor vorhanden sein, um einen Messbereich der Prallwand 4 zu beleuchten bzw. dessen Streustrahlung zu messen. Auch die Prallwand 4 kann eine funktionale Oberfläche aufweisen.

Die Lichtquelle 7 und der Lichtsensor 12 können außerhalb des Garraums 2 angeordnet sein. Sie können durch ein Sichtfenster von dem Garraum 2 getrennt sein. Die Lichtquelle 7 und der Lichtsensor 12 können grundsätzlich auch an anderen Wänden der Ofenmuffel 3 oder an einer Ofentür (o. Abb.) vorhanden sein, ggf. auch an unterschiedlichen Wänden.

**Fig.2** zeigt eine Auftragung einer Lichtintensität I in beliebigen Einheiten des Streulichts gegen eine Wellenlänge λ in nm des Streulichts für verschiedene Verschmutzungsgrade. Die Verschmutzungsgrade sind hier anhand einer Kurve K1 für eine saubere Oberfläche 5, einer Kurve K2 für eine normal verschmutzte Oberfläche 5 und einer Kurve K3 für eine stark verschmutzte Oberfläche 5 aufgetragen. Eine Kurve kann auch als ein Spektrum bezeichnet werden.

Dabei wird davon ausgegangen, dass die saubere Oberfläche 5 eine poröse, matte Oberfläche ist. Daher wird dort das Lichtbündel L stark diffus gestreut, so dass eine in den Lichtsensor 12 einfallende Lichtintensität I hoch ist. Dadurch wird im Lichtsensor 12 ein starkes Messsignal erzeugt. Die an der sauberen Oberfläche 5 gemessene Intensität wird als Referenzintensität $I_0$ verwendet. Diese Referenzmessung wird unmittelbar nach einem Ablauf eines Reinigungsprogramms durchgeführt. Mit zunehmender Verschmutzung wird die Oberfläche 5 glatter und glänzender und die Lichtintensität I des diffus gestreuten Lichts nimmt ab.

Der Lichtsensor 12 muss nicht den gesamten gezeigten Wellenlängenbereich nutzen, sondern kann auch nur einen Abschnitt des Wellenlängenbereichs nutzen, ggf. sogar praktisch nur eine Wellenlänge. Dies kann durch Verwendung eines vorgeschalteten Wellenlängenfilters erreicht werden.

**Fig.3** zeigt eine Auftragung eines aus Fig.2 abgeleiteten Streuungswerts A gegen die Wellenlänge λ in nm des Streulichts für verschiedene Verschmutzungsgrade. Der Streuungswert A berechnet sich aus der Beziehung $A = -\log(I/I_0)$ mit I als der aktuell gemessenen Lichtintensität und $I_0$ der Referenzintensität. Auftragungen des Streuungswerts A sind hier in Form einer Kurve A1 für eine saubere Oberfläche 5, einer Kurve A2 für eine normal verschmutzte Oberfläche 5 und einer Kurve A3 für eine stark verschmutzte Oberfläche 5 aufgetragen.

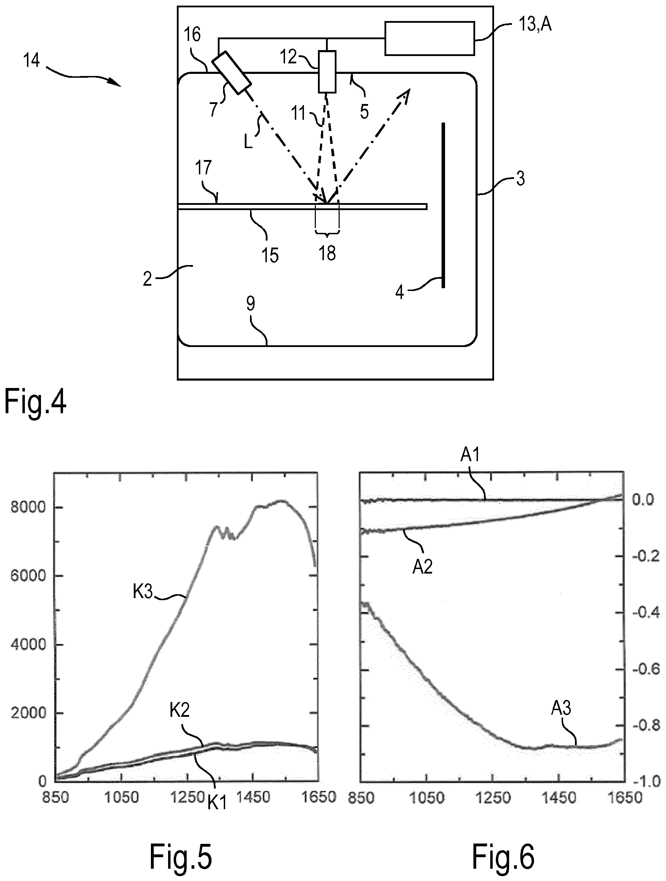

Durch Umrechnung in den Streuungswert A werden die Unterschiede zwischen unterschiedlichen Verschmutzungsgraden stärker hervorgehoben. Außerdem wird ein linearer Zusammenhang zum Grad der Verschmutzung hergestellt. Durch die Normierung auf die Referenzintensität $I_0$ erscheint die der sauberen Oberfläche 5 entsprechende Kurve A3 als Nulllinie. Mit zunehmender Verschmutzung weichen Kurven stärker davon ab. Wenn die Abweichung einen bestimmten Schwellwert (o. Abb.) erreicht oder überschreitet, wird durch den Backofen 1 eine Aktion ausgelöst, z.B. eine Reinigung des Garraums 2 vorgeschlagen. Nach Ablauf der Reinigung wird eine neue Referenzintensität $I_0$ bestimmt. **Fig.4** zeigt als Schnittdarstellung in Seitenansicht eine Skizze eines Backofens 14. Der Backofen 14 ist ähnlich zu dem Backofen 1 aufgebaut, ist aber zusätzlich oder alternativ dazu ausgebildet, wie gezeigt eine Oberseite eines Gargutträgers in Form eines Backblechs 15 oder alternativ einen Boden 9 der Ofenmuffel 3 auf Verschmutzung zu untersuchen.

Die Lichtquelle 7 und der Lichtsensor 12 sind nun im Bereich einer Decke 16 der Ofenmuffel 3 angeordnet. Die Lichtquelle 7 strahlt schräg auf die horizontal ausgerichtete Oberfläche 17 des Backblechs 15 ein, während der Lichtsensor 12 senkrecht auf die Oberfläche 17 gerichtet ist. Die Oberfläche 17 ist als eine im sauberen Zustand glatte und glänzende Antihaftoberfläche ausgebildet.

Daher wird dort das Lichtbündel L in dem zugehörigen Messbereich 18 wenig diffus gestreut, so dass eine in den Lichtsensor 12 einfallende Lichtintensität I gering ist. Dadurch wird in dem Lichtsensor 12 ein nur schwaches Messsignal erzeugt. Mit zunehmender Verschmutzung wird die Oberfläche 17 weniger glänzend und die Lichtintensität I des diffus gestreuten Lichts nimmt zu.

**Fig.5** zeigt dazu analog zu Fig.2 eine Auftragung einer Lichtintensität I in beliebigen Einheiten des Streulichts gegen eine Wellenlänge λ in nm des Streulichts für verschiedene Verschmutzungsgrade der Oberfläche 17.

**Fig.6** zeigt analog zu Fig.3 eine Auftragung eines aus Fig.2 abgeleiteten Streuungswerts A gegen die Wellenlänge λ in nm des Streulichts für verschiedene Verschmutzungsgrade der Oberfläche 17. In diesem Fall einer Steigerung der Streuung bei Verschmutzung ergibt sich eine negative Absorption für die verschmutzte Oberfläche 17.

In beiden Fällen (raue Ecolyseoberfläche und glatte Antihaftoberfläche) unterscheiden sich die Kurven K1 bis K3 bzw. A1 bis A3 beinahe im gesamten gemessenen Wellenlängenbereich deutlich. Daher ist es möglich, den Messbereich des Lichtsensors 12 einzuschränken bzw. einen besonders vorteilhaften Wellenlängenausschnitt im visuellen oder nah infraroten Bereich für die Verschmutzungserkennung auszuwählen. Allgemein kann zur Feststellung einer Verschmutzung ein spektraler Bereich oder auch praktisch nur eine Wellenlänge verwendet werden.

Die direkte Erkennung von Verschmutzungen während eines Reinigungsprogramms ermöglicht es weiterhin, das Reinigungsprogramm zu stoppen, sobald entweder eine saubere Oberfläche und/oder ein Abfallprodukt des Reinigungsvorgangs (z.B. Asche) detektiert werden.

Nachdem das Reinigungsprogramm durchgeführt wurde, wird eine neue Referenzmessung durchgeführt bzw. eine neue Referenzintensität $I_0$ aufgenommen, die einem Streuungswert von Null entspricht. Dies kann auch als "Neukalibrierung" bezeichnet werden. Zukünftige Verschmutzungen werden als Abweichung von dieser neuen Referenz detektiert. Dadurch wird einerseits die Genauigkeit der direkten Verschmutzungsdetektion erhöht und andererseits kompensiert die Neukalibrierung des Messsystems den Einfluss von Alterungs- und Verschleißerscheinungen der abzufühlenden Oberfläche. Diese Alterungs- und Verschleißerscheinungen können durch Aufbewahren z.B. des ersten gemessenen Referenzwerts oder der ersten gemessenen Referenzkurve und Vergleich mit folgenden Referenzwerten oder Referenzkurven verfolgt werden. Damit kann auch ein Schwellwert definiert werden, oberhalb dessen die untersuchte Oberfläche als verschlissen/abgenutzt angesehen wird.

Durch die direkte Messung des Verschmutzungsgrads können vorteilhafterweise überflüssige Reinigungsvorschläge vermieden werden. Stattdessen wird dem Nutzer die Reinigung des Ofens zu einem verbessert definierten Zeitpunkt vorgeschlagen. In Pyrolyse- oder Ecolyse (Katalyse)-Öfen ist dadurch die rechtzeitige Regenerierung der Funktion der Beschichtung sichergestellt. Eine direkte Messung der Verschmutzung ist insbesondere genauer als die bisherige Schätzung anhand einer Zählung von Benutzungszyklen, insbesondere da die entstehende Verschmutzung pro Garzyklus je nach Gargut stark variieren kann. Eine Verschmutzungsmessung während des Reinigungszyklus kann das Reinigungsergebnis verbessern oder durch Abschalten zu einem verbessert bestimmten Zeitpunkt Energie einsparen.

Selbstverständlich ist die vorliegende Erfindung nicht auf das gezeigte Ausführungsbeispiel beschränkt.

So können die Lichtquellen und die Lichtsensoren der Backöfen 1 und 14 auch in einem Gerät kombiniert sein.

Außerdem kann eine Garraumwandung und/oder die Prallwand mit einer Antihaftbeschichtung versehen sein und/oder ein Gargutträger mit einer katalytisch selbstreinigenden Oberfläche und/oder eine pyrolysetauglichen Oberfläche versehen sein. Gemäß der Erfindung ist allerdings die zur Streustrahlungsmessung verwendete Oberfläche eine poröse katalytisch selbstreinigende Oberfläche.

Zudem kann allgemein auch der Lichtsensor schräg auf den abzufühlenden Messbereich gerichtet sein.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

## Bezugszeichenliste

| 1 | Backofen |
|---|---|
| 2 | Garraum |
| 3 | Ofenmuffel |
| 4 | Prallwand |
| 5 | Katalytisch selbstreinigende Oberfläche der Ofenmuffel |
| 6 | Linke Seitenwand der Ofenmuffel |
| 7 | Lichtquelle |
| 8 | Rechte Seitenwand der Ofenmuffel |
| 9 | Boden der Ofenmuffel |
| 10 | Messbereich |
| 11 | Sichtbereich |
| 12 | Lichtsensor |
| 13 | Verarbeitungseinrichtung |
| 14 | Backofen |
| 15 | Backblech |
| 16 | Decke |
| 17 | Oberfläche des Backblechs |
| 18 | Messbereich |
| A | Streuungswert |
| A1-A3 | Kurven des Streuungswerts |
| I | Lichtintensität |
| K1-K3 | Kurven der Lichtintensität |
| L | Lichtbündel |
| λ | Wellenlänge |

## Patentansprüche

1. Verfahren zum Bestimmen einer Verschmutzung einer Oberfläche (5), die einem Garraum (2) eines Gargeräts (1; 14) ausgesetzt ist, wobei

   - die Oberfläche (5) eine poröse katalytisch selbstreinigende Oberfläche (5) ist und wobei bei dem Verfahren
   - ein Messbereich (10; 18) der katalytisch selbstreinigende Oberfläche (5) mittels eines Lichtbündels (L) beleuchtet wird,
   - eine von dem Messbereich (10; 18) abgestrahlte Stärke (I, $I_0$) einer Streustrahlung gemessen wird,

- aus der Streustrahlung ein Streuungswert (A) als ein von einer Referenzstärke ($I_0$) der Streustrahlung abhängiges Maß für die Verschmutzung bestimmt wird und
- mindestens ein Reinigungsvorgang ausgelöst wird, wenn der Streuungswert (A) einen kritischen Verschmutzungsgrad erreicht hat, wobei
- die Referenzstärke ($I_0$) einer Stärke der Streustrahlung entspricht, die nach einem Reinigungsvorgang gemessen wird und
- nach jedem Reinigungsvorgang eine Referenzmessung zum Bestimmen der Referenzstärke ($I_0$) der Streustrahlung durchgeführt wird.

2. Verfahren nach Anspruch 1, bei dem eine verbrauchte katalytisch selbstreinigende Oberfläche (5) anhand einer zeitlichen Entwicklung der Referenzstärken ($I_0$) erkannt wird.

3. Verfahren nach einem der vorhergehenden Ansprüche, bei dem zum Messen der Streustrahlung eine Lichtintensität (I) der Streustrahlung gemessen wird und der Streuungswert (A) gemäß der Beziehung

$$A = - \log (I / I_0)$$

bestimmt wird, wobei A der Streuungswert, I die gemessene Lichtintensität und $I_0$ eine Referenzintensität ist.

4. Verfahren nach einem der vorhergehenden Ansprüche, bei dem dann, wenn die Verschmutzung einen kritischen Verschmutzungsgrad erreicht hat, zusätzlich ein Hinweis an einen Nutzer ausgegeben wird.

5. Verfahren nach einem der vorhergehenden Ansprüche, bei dem die Streustrahlung während eines Reinigungsvorgangs gemessen wird und der Reinigungsvorgang beendet wird, wenn der Streuungswert (A) einen vorgegebenen Schwellwert erreicht oder unterschreitet.

6. Verfahren nach einem der vorhergehenden Ansprüche, bei dem das auf den Messbereich einfallende Lichtbündel (L) Infrarotlicht, insbesondere NIR-Licht, umfasst und die Streustrahlung auf charakteristische Absorptionsspektren hin untersucht wird.

7. Verfahren nach Anspruch 6, bei dem

- die Streustrahlung während eines Reinigungsvorgangs gemessen und auf charakteristische Absorptionsspektren hin untersucht wird und
- abhängig von einem Vorliegen mindestens eines vorgegebenen Absorptionsspektrums der Reinigungsvorgang reguliert oder abgebrochen wird.

8. Verfahren nach Anspruch 7, bei dem der Reinigungsvorgang abgebrochen wird, wenn bestimmte, anhand ihres Absorptionsspektrums erkannte Stoffe nicht mehr oder nur noch schwach detektiert werden und/oder bestimmte, anhand ihres Absorptionsspektrums erkannte Stoffe neu detektiert werden und/oder mit einer vorgegebenen Stärke auftreten.

9. Verfahren nach einem der vorhergehenden Ansprüche, bei dem eine von dem Messbereich abgestrahlte Stärke einer Streustrahlung bei ausgeschalteten Lichtquellen (7) gemessen wird und das gemessene Hintergrundsignal von einem Messsignal bei angeschalteten Lichtquellen (7) abgezogen wird.

10. Gargerät (1; 14), aufweisend

- einen Garraum (2),
- mindestens eine Lichtquelle (7) zur Bestrahlung eines Messbereichs (10) einer porösen katalytisch selbstreinigenden Oberfläche (5), die dem Garraum (2) ausgesetzt ist, mit einem Lichtbündel (L),
- mindestens einen Lichtsensor (12) zum Messen von Streustrahlung von dem Messbereich (10; 18) und
- eine mit der mindestens einen Lichtquelle (7) und mit dem mindestens einen Lichtsensor (12) gekoppelte Verarbeitungseinrichtung (13), die dazu eingerichtet ist, aus der Streustrahlung einen Streuungswert (A) als ein Maß für die Verschmutzung abhängig von einer Referenzstärke ($I_0$) der Streustrahlung zu bestimmen und einen Reinigungsvorgang auszulösen, wenn der Streuungswert (A) einen kritischen Verschmutzungsgrad erreicht hat, wobei die Referenzstärke ($I_0$) einer Stärke der Streustrahlung entspricht, die nach einem Reinigungsvorgang gemessen wird und
- das Gargerät (1; 14) dazu eingerichtet ist, nach jedem Reinigungsvorgang eine Referenzmessung zum Bestimmen der Referenzstärke ($I_0$) der Streustrahlung durchgeführt wird.

11. Gargerät (1) nach Anspruch 10, wobei die Oberfläche (5) eine Oberfläche einer Garraumwandung (3; 8) oder einer Prallwand (4) ist.

12. Gargerät (1; 14) nach Anspruch 11, wobei mindestens ein Lichtsensor (12) an einer dem Messbereich (10; 18) gegenüberliegenden Wand (16) der Garraumwandung (3) angeordnet ist, senkrecht auf den beleuchtbaren Messbereich (10) gerichtet ist und die mindestens eine Lichtquelle (7) schräg auf den beleuchtbaren Messbereich (10; 18) gerichtet ist.

**Claims**

1. Method for determining a degree of contamination of a surface (5) exposed to a cooking chamber (2) of a cooking appliance (1; 14), wherein

   - the surface (5) is a porous catalytic self-cleaning surface (5) and wherein with the method
   - a measuring region (10; 18) of the catalytic self-cleaning surface (5) is illuminated by means of a light bundle (L),
   - an intensity (I, $I_0$) of scatter radiation radiated by the measuring region (10; 18) is measured,
   - a scatter value (A) is determined as a measure of the degree of contamination which is dependent on a reference intensity ($I_0$) of the scatter radiation from the scatter radiation and
   - at least one cleaning process is initiated when the scatter value (A) has reached a critical degree of contamination,
   wherein

   - the reference intensity ($I_0$) corresponds to an intensity of the scatter radiation which is measured following a cleaning process and
   - after each cleaning process, a reference measurement for determining the reference intensity ($I_0$) of the scatter radiation is carried out.

2. Method according to claim 1, in which a consumed catalytic self-cleaning surface (5) is identified on the basis of a development of the reference intensities ($I_0$) over time.

3. Method according to one of the preceding claims, in which in order to measure the scatter radiation, a light intensity (I) of the scatter radiation is measured and the scatter value (A) is determined according to the ratio

$$A = -\log (I/I_0)$$

wherein A is the scatter value, I the measured light intensity and $I_0$ a reference intensity.

4. Method according to one of the preceding claims, in which when the degree of contamination has reached a critical degree of contamination, an indication is additionally output to a user.

5. Method according to one of the preceding claims, in which the scatter radiation is measured during a cleaning process and the cleaning process is terminated when the scatter value (A) reaches or does not reach a predetermined threshold value.

6. Method according to one of the preceding claims, in which the light bundle (L) incident on the measuring region comprises infrared light, in particular NIR light, and the scatter radiation is examined for characteristic absorption spectra.

7. Method according to claim 6, in which

   - the scatter radiation is measured during a cleaning process and examined for characteristic absorption spectra and
   - the cleaning process is regulated or interrupted as a function of a presence of at least one predetermined absorption spectrum.

8. Method according to claim 7, in which the cleaning process is interrupted if specific substances identified using their absorption spectrum are no longer or only weakly detected and/or specific substances identified using their absorption spectrum are detected again and/or occur with a predetermined intensity.

9. Method according to one of the preceding claims, in which an intensity of scatter radiation radiated by the measuring region is measured when the light sources (7) are switched off and the measured background signal is removed from a measuring signal when the light sources (7) are switched on.

10. Cooking appliance (1; 14) having

    - a cooking chamber (2),
    - at least one light source (7) for irradiating a measuring region (10) of a porous catalytic self-cleaning surface (5), which is exposed to the cooking chamber (2), with a light bundle (L),
    - at least one light sensor (12) for measuring scatter radiation from the measuring region (10; 18) and
    - a processing facility (13) coupled to the at least one light source (7) and to the at least one light sensor (12), which is designed to determine a scatter value (A), from the scatter radiation, as a measure of the degree of contamination as a function of a reference intensity ($I_0$) of the scatter radiation and to initiate a cleaning process when the scatter value (A) has reached a critical degree of contamination, wherein the reference intensity ($I_0$) corresponds to an intensity of the scatter radiation which is measured following a cleaning process and
    - the cooking appliance (1; 14) is designed so that after each cleaning process a reference measurement is carried out in order to determine the reference intensity ($I_0$) of the scatter radiation.

11. Cooking appliance (1) according to claim 10, wherein the surface (5) is a surface of a cooking chamber wall (3; 8) or a deflector plate (4).

12. Cooking appliance (1; 14) according to claim 11, wherein at least one light sensor (12) is arranged on a wall (16) of the cooking chamber wall (3) facing the measuring region (10; 18), aligned at a right angle to the illuminable measuring region (10) and the at least one light source (7) is directed at an angle onto the illuminable measuring region (10; 18).

**Revendications**

1. Procédé de détermination d'un encrassement d'une surface (5) exposée à un espace de cuisson (2) d'un appareil de cuisson (1 ; 14), dans lequel

- la surface (5) est une surface autonettoyante catalytique poreuse (5) et dans lequel dans le procédé
- une zone de mesure (10 ; 18) de la surface autonettoyante catalytique (5) est éclairée au moyen d'un faisceau de lumière (L),
- une intensité (I, $I_0$) d'un rayonnement par diffusion émise par la zone de mesure (10 ; 18) est mesurée,
- une valeur de diffusion (A) est déterminée au départ du rayonnement par diffusion, sous la forme d'une mesure pour l'encrassement dépendant d'une intensité de référence ($I_0$) du rayonnement par diffusion et
- au moins un processus de nettoyage est déclenché lorsqu'une valeur de diffusion (A) a atteint un degré d'encrassement critique, dans lequel
- l'intensité de référence ($I_0$) correspond à une intensité du rayonnement par diffusion mesurée après un processus de nettoyage et
- une mesure de référence pour déterminer l'intensité de référence ($I_0$) du rayonnement par diffusion est effectuée après chaque processus de nettoyage.

2. Procédé selon la revendication 1, dans lequel une surface autonettoyante catalytique usée (5) est reconnue au moyen d'une évolution temporelle des intensités de référence ($I_0$).

3. Procédé selon l'une des revendications précédentes, dans lequel pour mesurer le rayonnement par diffusion une intensité lumineuse (I) du rayonnement par diffusion est mesurée et la valeur de diffusion (A) est déterminée selon la relation

$$A = -\log(I / I_0)$$

dans laquelle A est la valeur de diffusion, I l'intensité lumineuse mesurée et $I_0$ une intensité de référence.

4. Procédé selon l'une des revendications précédentes, dans lequel une indication est en outre émise à destination d'un utilisateur lorsque l'encrassement a atteint un degré d'encrassement critique.

5. Procédé selon l'une des revendications précédentes, dans lequel le rayonnement par diffusion est mesuré durant un processus de nettoyage et le processus de nettoyage est terminé lorsque la valeur de diffusion (A) atteint ou descend sous une valeur seuil prédéfinie.

6. Procédé selon l'une des revendications précédentes, dans lequel le faisceau lumineux (L) parvenant à la zone de mesure comprend de la lumière infrarouge, en particulier de la lumière proche infrarouge, et le rayonnement par diffusion est examiné quant à des spectres d'absorption caractéristiques.

7. Procédé selon la revendication 6, dans lequel

- le rayonnement par diffusion est mesuré durant un processus de nettoyage et examiné quant à des spectres d'absorption caractéristiques et
- en fonction d'une présence d'au moins un spectre d'absorption prédéfini, le processus de nettoyage est régulé ou interrompu.

8. Procédé selon la revendication 7, dans lequel le processus de nettoyage est interrompu lorsque des matières déterminées reconnues au moyen de leur spectre d'absorption ne sont plus ou plus que faiblement détectées et/ou lorsque des matières déterminées reconnues au moyen de leur spectre d'absorption sont nouvellement détectées et/ou se manifestent selon une intensité prédéfinie.

9. Procédé selon l'une des revendications précédentes, dans lequel une intensité d'un rayonnement par diffusion émis par la zone de mesure en présence de sources lumineuses (7) éteintes est mesurée et le signal d'arrière-plan mesuré est déduit d'un signal de mesure en présence de sources lumineuses (7) allumées.

10. Appareil de cuisson (1 ; 14), présentant

- un espace de cuisson (2),
- au moins une source lumineuse (7) pour l'illumination d'une zone de mesure (10) d'une surface autonettoyante catalytique poreuse (5) exposée à l'espace de cuisson (2), avec un faisceau de lumière (L),
- au moins un capteur de lumière (12) pour la mesure du rayonnement par diffusion de la zone de mesure (10 ; 18) et

- un dispositif de traitement (13) couplé à l'au moins une source lumineuse (7) et à l'au moins un capteur de lumière (12), lequel dispositif est configuré pour déterminer au départ du rayonnement par diffusion une valeur de diffusion (A) sous la forme d'une mesure pour l'encrassement en fonction d'une intensité de référence ($I_0$) du rayonnement par diffusion et de déclencher un processus de nettoyage lorsque la valeur de diffusion (A) a atteint un degré d'encrassement critique, dans lequel l'intensité de référence ($I_0$) correspond à une intensité du rayonnement par diffusion mesurée après un processus de nettoyage et

- l'appareil de cuisson (1 ; 14) est configuré pour effectuer après chaque processus de nettoyage une mesure de référence pour déterminer l'intensité de référence ($I_0$) du rayonnement par diffusion.

**11.** Appareil de cuisson (1) selon la revendication 10, dans lequel la surface (5) est une surface d'une paroi d'espace de cuisson (3 ; 8) ou une paroi d'impact (4).

**12.** Appareil de cuisson (1 ; 14) selon la revendication 11, dans lequel au moins un capteur de lumière (12) est disposé sur une paroi (16) de la paroi d'espace de cuisson (3) opposée à la zone de mesure (10 ; 18), dirigée perpendiculairement sur la zone de mesure pouvant être éclairée (10) et l'au moins une source lumineuse (7) est dirigée en biais sur la zone de mesure pouvant être éclairée (10 ; 18).

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014116709 A1
- WO 2014102074 A1
- EP 0528250 A2
- DE 102014217636 A1
- DE 10128024 A1
- DE 4127388 A1
- DE 202005012027 U1
- KR 20110011817 A